# EUROPEAN PATENT SPECIFICATION

(11) **EP 3 106 357 B1**
(45) Date of publication and mention of the grant of the patent: **24.10.2018**
(21) Application number: 15465525.2
(22) Date of filing: 19.06.2015
(51) Int. Cl.: B60R 25/0215, F16D 55/00, B62D 5/00

(54) **ELECTRONIC STEERING COLUMN LOCK SYSTEM**
ELEKTRONISCHES LENKSÄULENVERRIEGELUNGSSYSTEM
SYSTÈME DE VERROUILLAGE DE COLONNE DE DIRECTION ÉLECTRONIQUE

(43) Date of publication of application: 21.12.2016
(73) Proprietor: Continental Automotive GmbH, 30165 Hannover (DE)
(72) Inventor: MARIU, Stefan, 707515 Tomesti / Iasi (RO)

(56) References cited:
- EP-A1- 1 645 479
- JP-A- 2007 168 640
- US-A- 5 921 355

## Description

### Technical Field

This invention relates to an electronic steering column lock system (ESCL-system). Such systems for example can be used to selectively lock or unlock a steering wheel of a vehicle (for example a car) or the like.

### Background

Known ESCL-systems usually comprise an actuator (e.g. a motor) that moves a pin into holes in the steering column in order to lock it as an anti-theft measure or removes the pin from the holes in order to unlock it so that the steering wheel can be freely moved for steering the vehicle. A usual system is disclosed by US 7, 327, 050 B2. Such known ESCL-systems allow only two states: locked and unlocked.
The document US 5,921,355 A discloses an automobile anti-theft device that inhibits car thefts by anyone not having the ignition key because normal use of the ignition key controls the flow of electric power which either locks the steering rod through braking action, making the automobile impossible to steer when the ignition key is turned to the "off" position or releases the braking action for normal steering action when the ignition key is turned to the "on" position. In detail the anti-theft device comprises a device located within a cage in a steering column enclosure and controlled by an ignition key core, thus making it indiscernible and tamper-proof without dismantling. The steering column enclosure comprises:
an ignition key, a cylindrical collar fitted on a steering rod to provide increased leverage for braking action, a one piece spring band fitted with brake pads and encompassing said cylindrical collar, a threaded bolt cradled by a cage and with sections threaded in opposite directions to match two brake band nuts and fitted in the center with a worm gear wheel, a worm gear shaft mating with said worm gear wheel and driven by a bi-directional motor which will turn in either direction said bi-directional motor controlled by three insulated electric wires to energize said motor to provide brake tightering action when said ignition key is turned to the 'off' position and brake release action when said ignition key is turned to the 'on' position wherein two of said three insulated wires are connected to contacts on said ignition key core and each of said two wires have a circuit breaker switch adjusted to stop said motor when the spring band ends reach predetermined positions and a third of said three insulated wires is a ground.

### Summary of Invention

Regarding the above explained known ESCL-systems it is considered to be adversely that because of the fact that they only allow the two states, namely locked and unlocked, it is not possible to implement other functionalities to the system.

One object of the present invention is to provide an improved electronic steering column lock system. In particular, one object of the present invention is to provide an electronic steering column lock system which is configured to enable adding of other functionalities to said system.

In order to achieve the object, the present invention provides an electronic steering column lock system comprising: a housing, said housing at its inside comprising a first external thread which is a right-hand thread and a second external thread which is a left-hand thread, a steering column shaft, a disk, said disk being rigidly connected to a steering column shaft or said disk being configured to be rigidly connected to a steering column shaft, a first gearwheel comprising an internal thread which is a right-hand thread and a second gearwheel comprising an internal thread which is a left-hand thread, wherein the first gearwheel by means of its right-hand thread being mounted on the right-hand thread of the housing and wherein the second gearwheel by means of its left-hand thread being mounted on the left-hand thread of the housing, wherein the disk being disposed between the first gearwheel and the second gearwheel with regard to an axial direction, and wherein either the electronic steering column lock system comprising a pinion connectable to a motor, said pinion engaging the first gearwheel and the second gearwheel. As an alternative, the above mentioned final feature that the electronic steering column lock system comprises a pinion wherein said pinion engaging the first gearwheel and the second gearwheel may be replaced by the feature that the electronic steering column lock system comprises a first pinion and a second pinion connectable to a motor, said second pinion being coupled torsion proof to said first pinion, said first pinion engaging the first gearwheel and said second pinion engaging the second gearwheel, wherein by rotating said pinion or said first pinion and said second pinion in a certain direction, because of the opposite pitch of the first and second external threads, the first and second gearwheels move closer to each other applying a pressure to the disk after a certain axial movement of the gearwheels.

Thus, completely differing from known ESC-systems, represented by US 7,327,050 B2, which provide the locked stage by form-locking means, the electronic steering column lock system provided by the invention is capable to provide a locked state by friction forces which are applied to the disk which is rigidly connected or configured to be rigidly connected to the steering column shaft. Accordingly, an electronic steering column lock system according to the invention can also be denoted as a frictional electronic steering column lock system. An electronic steering column lock system according to the invention provides the possibility that between a locked state and an unlocked state there is a range wherein the required steering torque is somewhat increased compared to the unlocked state, however wherein it is still possible to rotate the steering wheel in both directions for steering a vehicle or the like by a person. Thus, the invention provides the possibility to add more functionality to an electronic steering column lock system (ESCL-system) . The invention provides the possibility to implement a haptic response in a steering wheel. The invention also provides a self-locking system for lock function.

If the motor rotates the pinion the gearwheels will move closer or further (depending on the rotation direction) from each other due to the opposite windings, i.e. because of the opposite pitch, of the threads of the housing supporting the first and the second gear wheels. If the pinion is moved in a rotation direction so that the gearwheels move closer to each other, after a certain axial movement the gearwheels, in particular by means of brake pads or the like, they will start applying a pressure from opposite directions to the disk of the steering column shaft. At the beginning the applied pressure will be only small but will increase on further moving in this direction. An axial pressure which is applied to the disc will cause a friction force (breaking force) which increases the required torque for turning a steering wheel which may be coupled to the steering column shaft. If the axial pressure applied to the disk increases, this also results in that the friction/braking force and the torque for turning the steering wheel increases (and vice versa, respectively) . When the axial pressure applied by both gearwheels to the disk increases to a certain range, the electronic steering column lock system becomes self-locking. The reason is that due to the system's behaviour, by rotating the steering column shaft in any direction, one of the gearwheels will be further tightened against the disk thus increasing the braking force. This can be used for anti-theft protection. Unlocking of the system is possible by rotating the pinion (or, depending from the embodiment, both coupled pinions) in a direction which causes both gearwheels due to their opposite pitch of their internal threads to be axially moved in opposite directions, i.e. away from the disk.

In the following, exemplary embodiments and refinements of an electronic steering column lock system according to the invention are described:
In a preferred embodiment the disk and the first gearwheel may at least partly overlap each other with regard to a radial direction and the disk and the second gearwheel may at least partly overlap each other with regard to the radial direction. Preferably, the axial direction is parallel to the longitudinal axes of the steering column shaft. Preferably, the radial direction is perpendicular to the axial direction.

It is preferred that a first brake pad is fixed at a face side of the first gearwheel facing the disk so that the first brake pad and the disk are overlapping each other at least partly with regard to a radial direction, and a second brake pad is fixed at a face side of the second gearwheel facing the disk so that the second brake pad and the disk are overlapping each other at least partly with regard to the radial direction. According to an exemplary alternative, it is possible that a first brake pad is fixed at a face side of the disk facing the first gearwheel so that the first brake pad and the disk are overlapping each other at least partly with regard to a radial direction, and a second brake pad is fixed at a face side of said disk facing the second gearwheel so that the second brake pad and the disk are overlapping each other at least partly with regard to the radial direction.

In an appropriate embodiment the disk and the steering column shaft are formed integrally. In an embodiment where the disk is ridigly connected to a steering column shaft, the steering column shaft may be considered to be a part of the electronic steering column lock system. Preferably, the disk is formed annularly and in particular circularly.

It is preferred that the housing is configured to be fixed at the inside of a vehicle, for example at a dash board of the vehicle, and/or that the housing provides at least one rotary feedthrough for the steering column shaft and that the rotary feedthrough is configured so that the centreline of the steering column shaft corresponds to the centerline of the first gearwheel and corresponds to the centerline of the second gearwheel.

In a preferred embodiment the invention provides that with regard to the axial direction the distance between the first gearwheel and the disk and the distance between the second gearwheel and the disk are equal.

In a preferred embodiment the electronic steering column lock system comprises a motor being coupled to the pinion or being coupled to said first pinion and/or to said second pinion.

Preferably, the electronic steering column lock system is configured such that in a steering locked state of the electronic steering column lock system the first gearwheel and the disk are locked with each other, in particular by means of the first brake pad or similar feature, and/or the second gearwheel and the disk are locked with each other, in particular by means of the second brake pad or similar feature.

Preferably the electronic steering column lock system is configured so that in an intermediate state of the electronic steering column lock system which is between a steering locked state and a steering unlocked state the amount of pressure applied respectively to the first gearwheel, the disk and the second gearwheel is less compared to the amount of said pressure applied in the steering locked state but more compared to the amount of said pressure applied in the steering unlocked state.

Preferably the electronic steering column lock system comprises a control unit being configured for controlling the motor.

In a preferred embodiment the electronic steering column lock system is configured so that the electronic steering column lock system comprises at least an external sensor or a communication method to other sensor like devices, and in particular in that the control unit is configured for controlling the motor subject to a signal provided by the external sensor. The external sensor may be configured for sensing a variable.

According to a preferred embodiment the electronic steering column lock system is developed so that the electronic steering column lock system comprises a first pressure sensor being configured for detecting a pressure applied to the first gearwheel, the first brake pad and the disk, and that the electronic steering column lock system comprises a second pressure sensor being configured for detecting a pressure applied to the second gearwheel, the second brake pad and the disk, and so that the first pressure sensor and the second pressure sensor are connected to the control unit. By using pressure sensors the friction/braking force can be adjusted, for example including using vibration or increasing the necessary steering force, providing thus haptic notifications to a driver of a vehicle or the like. For locking the steering wheel, for anti-theft protection, the brake pads can be pressed against the disk and the system can be left free. Due to the system's behaviour, by rotating the steering column's shaft in any direction, one of the disks will be further tightened against the disk, increasing thus the breaking force and the system becomes self-locking.

Thus, the invention comes to offer greater flexibility to the ESCL-system, allowing other functionalities to be added to the system. E.g. haptic response in the steering wheel can be provided based on the input from other sensors, to make the driver aware of different road conditions, dangers or the like.

According to a preferred embodiment it is provided that the control unit is configured to control the motor subject to a signal provided by the first pressure sensor and subject to a signal provided by the second pressure sensor in such a manner that a pressure whose amount is a predetermined function of the signal provided by the external sensor is applied to the first gearwheel, the first brake pad and the disk and/or to the second gearwheel, the second brake pad and the disk.

It is possible that the electronic steering column lock system is configured so that the control unit is configured to control the motor in such a manner that subject to a signal provided by the external sensor an oscillating pressure is applied to the first gearwheel, the first brake pad and the disk and/or to the second gearwheel, the second brake pad and the disk. This also increases the possibilities and flexibility of the ESCL-system according to the invention to add other functionalities.

According to a further aspect of the invention the same concept as described above can be used for static brakes that are preferred to be self-locking, like car parking brakes. For such use above mentioned disk for example can be rigidly connected to a shaft of a brake or said disk may be configured to be rigidly connected to the shaft of a brake. Such a system could also be denoted electronic braking lock system, or the like.

### Brief Description of Drawings

The invention will now be described by way of example with reference to the accompanying drawings of which:
- Figure 1: is a schematic sectional view of a preferred embodiment of the inventive electronic steering column lock system shown in a steering unlocked state, wherein the section view is taken in a plane comprising a centerline of a steering columns shaft;
- Figure 2: is a sectional view of the embodiment of Figure 1, however wherein the electronic steering column lock system is shown in a steering locked state; and
- Figure 3: is an exploded view of the embodiment shown by Figures 1 and 2.

### Description of Embodiments

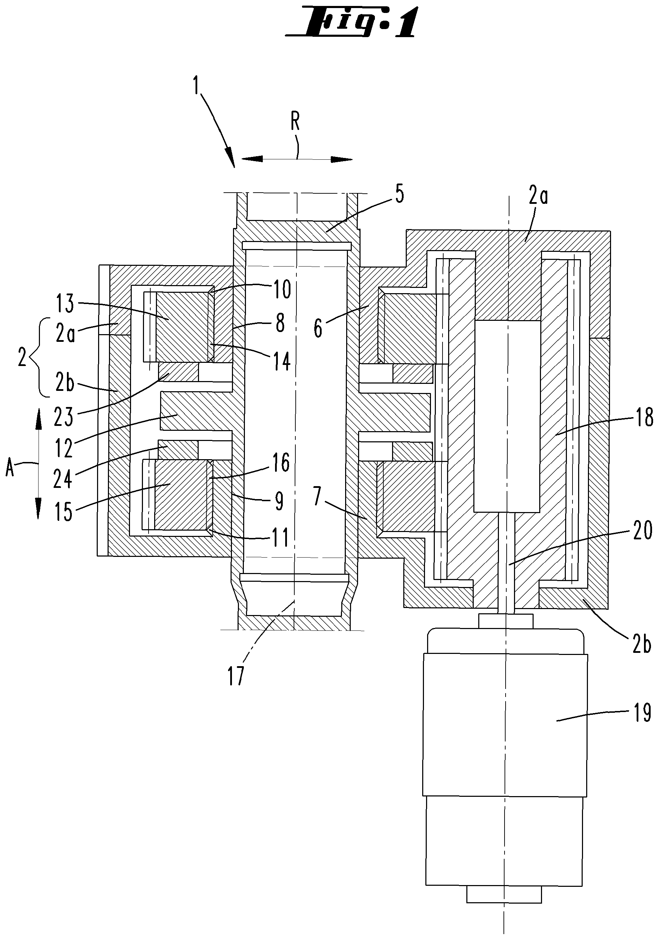

With reference to Figures 1-3 it is described by way of example an embodiment of an electronic steering column lock system 1 according to the invention. The system comprises a housing 2 having two housing components 2a, 2b. The housing components 2a, 2b can be detachably fixed to each other, for example by means of screws (not shown in the figures). For example, screws may be inserted in holes 3 of the shown housing components 2a and may be screwed in holes 4 of the housing components 2b. In the figures a steering column shaft (shown only partly) is designated with the reference number 5. The housing 2 comprises a first inwardly extending sleeve 6 which at its inside provides a first rotary feedthrough 8 for a cylindrical section of the steering column shaft 5. Further, the housing 2 comprises a second inwardly extending sleeve 7 providing at its inside a second feedthrough 9 for another cylindrical section of the steering column shaft 5. In the example the first sleeve 6 is integrally formed at the housing component 2a and the second sleeve 7 is integrally formed at the housing component 2b. The sleeves 6, 7 provide areas that act as a respective bearing to the steering column shaft 5. The sleeve 6 has a first external thread 10 which in the example is a right-hand thread. The second sleeve 7 has a second external thread 11 which in the example is a left-hand thread. In the shown example, the electronic steering column lock system 1 comprises a disk 12 which is rigidly connected to the steering column shafts. In the example, the disk 12 and the steering column shaft 5 are formed integrally and the disk 12 is formed annularly and circularly. Thus, the example because of the integral construction the steering column shaft 5 can be considered to be a component of the electronic steering column lock system 1.

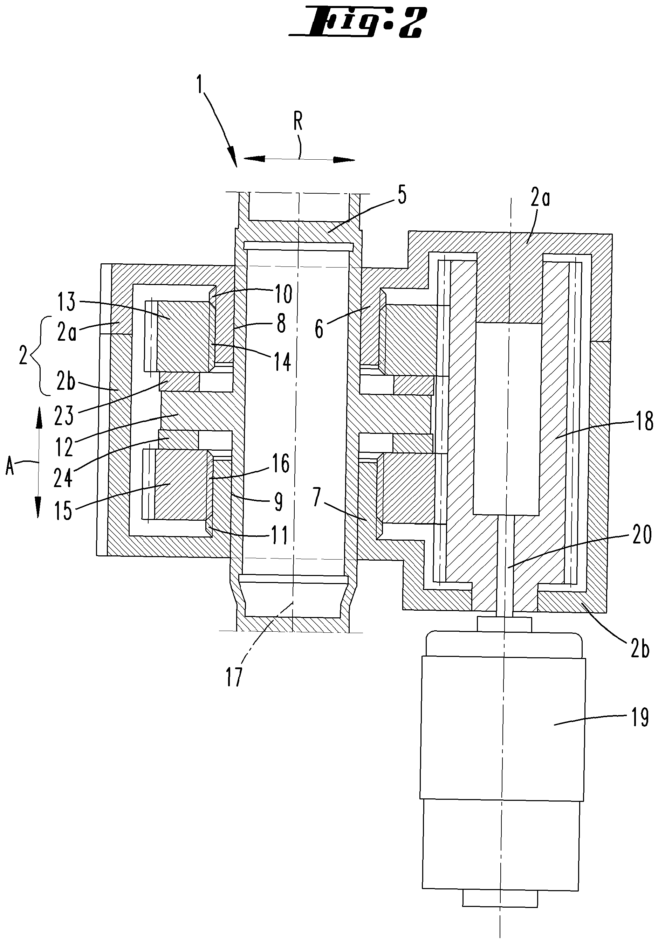

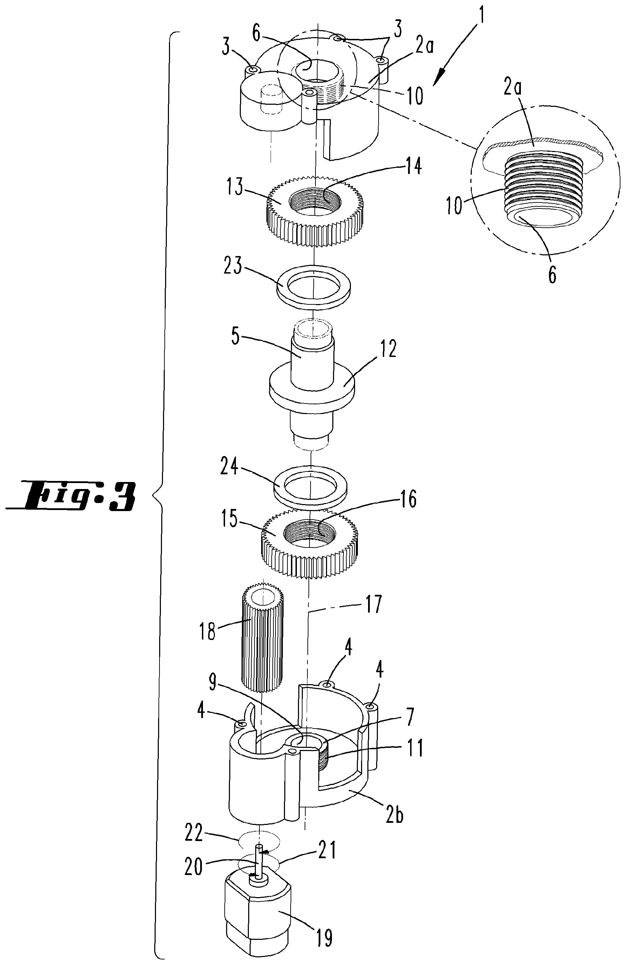

The electronic steering column lock system comprises a first gearwheel 13 comprising an internal thread 14 which in the example is a right-hand thread mating to the external thread 10 of the housing 2. Further, the electronic steering column lock system 1 comprises a second gear wheel 15 comprising an internal thread 16 which in the example is a left-hand thread mating the external thread 11 of the housing 2. As shown by figures 2 and 3 the first gearwheel 13 by means of its right-hand thread 14 is mounted on the right-hand thread 10 of the housing 2 and the second gearwheel 16 by means of its left-hand thread 16 is mounted on the left-hand thread 11 of the housing 2. The disk 12 is located between the first gearwheel 13 and the second gearwheel 15 with regard to an axial direction (A) which is parallel to the centerline 17 of the steering column shaft 5.

In the exemplary embodiment shown in Figures 1-3 the electronic steering column lock system 1 comprises a pinion 18 comprising external teeth which are mated to the external teeth of the gearwheels 13, 15, respectively. In the example, the outer diameter of the first gearwheel 13 corresponds to the outer diameter of the second gearwheel 15 and said diameter is bigger compared to the outer diameter of the pinion 18. On the other hand the axial dimension of the pinion 18 in the example is bigger compared to the axial dimensions of the gearwheels 13, 15. As shown by the figures, pinion 18 is mounted rotatably inside the housing 2 so that its external teeth engage the external teeth of the first gearwheel 13 and the external teeth of the second gearwheels 15, respectively. Accordingly, both gearwheels 13, 15 are geared with a single pinion 18. In the example, pinion 18 is connected to the motor 19 by means of a driving shaft 20. In operation of the electronic steering column lock system, when the motor 19 rotates the pinion 18 in a first rotation direction 21, accordingly gearwheels 13 and 15 will rotate in the opposite rotation direction. Thus, gearwheel 13 which is screwed on the right-hand thread 10 and also gearwheel 15 which is screwed on the left-hand thread 11 due to its opposite windings both will move closer to the disk 12. On the other hand, if the motor 19 drives the pinion 18 in the opposite rotation direction 22, for the same reason both gearwheels 13 and 15 due to its opposite windings of the threads, both will move away from the disk 12 with regard to the axial direction A.

According to another embodiment (not shown by the figures) instead of comprising only a single pinion there is the possibility that the electronic steering column lock system 1 comprises for example two pinions, i.e. a first pinion and a second pinion, wherein said first and second pinions are coupled torsion proof to each other, wherein said first pinion is engaging the first gearwheel and said second pinion is engaging the second gearwheel. For those skilled in the art it is clear that such alternative works in a same manner as the embodiment shown by the Figures.

Accordingly, in operation by actuating the motor 19 in the rotation direction 21 the gearwheels 13, 15 approach to each other and after covering a certain distance in axial direction A come close to the disk 12 rigidly mounted to the steering column 5. In the shown example to avoid wear of gearwheels 13, 15 a brake pad 23 is fixed at the side of the first gearwheel 13 facing the disk 12 so that the first brake pad 23 and disk 12 are overlapping each other with regard to a radial direction (please see arrow R) and second brake pad 24 is fixed at the face side of the second gearwheel 15 facing the disk 12 so that the second brake pad 24 and the disk 12 are overlapping with regard to the radial direction R, too. Accordingly, on driving the pinion 18 in the rotation direction 21, brake pads 23 and 24 will start pressing on the steering column shaft's 5 disk 12 generating a friction force. On further turning in such direction the system will become self-locking.

Fig. 1 shows the electronic steering column lock system 1 in a steering unlocked state in which there is no contact between the brake pads 23, 24 and the disk 12 which means that both gearwheels 13, 15 can be freely rotated in both directions without an axial resistance into the disk 12. On the other hand, Figure 2 shows the electronic steering column lock system 1 in a steering locked state where both brake pads 23, 24 are axially pressed against the disk 12. In the steering locked state the electronic steering column lock system becomes self-locking, because due to the system's behavior by rotating the steering column shaft 5 in any direction, one of the gearwheels 13, 15 will be further tightened against the disk 12, increasing thus the breaking force, even if the system is without electric energy. In an intermediate state (not shown in the figures) of the electronic steering column lock system 1, where for example there is only a slight contact pressure by the gearwheels 13, 15 via its brake pads 23, 24 to the disk 12, i.e. in other words in a state which is between the described steering locked state and the described steering unlocked state, the rotatory resistance of the steering column shaft 5, which can be coupled to a steering wheel of a vehicle or the like, with regard to both possible rotation directions is in a range so that a rotation in both directions is still possible, however (at least in one of both directions), there is a higher torque compared to the unlocked state of the system.

### Reference Signs List

- 1: steering column lock system
- 2: housing
- 3: holes
- 4: holes
- 5: steering column shaft
- 6: sleeve
- 7: sleeve
- 8: feedthrough
- 9: feedthrough
- 10: thread
- 11: thread
- 12: disk
- 13: gearwheel
- 14: thread
- 15: gearwheel
- 16: thread
- 17: centerline
- 18: pinion
- 19: motor
- 20: driving shaft
- 21: driving direction
- 22: rotation direction
- 23: brake pad
- 24: brake pad

- A: axial direction
- R: radial direction

## Claims

1. An electronic steering column lock system (1) comprising:
a housing (2), said housing (2) comprising a first external thread (10) which is a right-hand thread and said housing (2) comprising a second external thread (11) which is a left-hand thread,
a steering column shaft (5),
a disk (12), said disk (12) being rigidly connected to the steering column shaft (5) or said disk (12) being configured to be rigidly connected to the steering column shaft (5), a first gearwheel (13) comprising an internal thread (14) which is a right-hand thread and
a second gearwheel (15) comprising an internal thread (16) which is a left-hand thread,
the first gearwheel (13) by means of its right-hand thread (14) being mounted on the right-hand thread (10) of the housing and the second gearwheel (15) by means of its left-hand thread (16) being mounted on the left-hand thread (11) of the housing (2),
the disk (12) being disposed between the first gearwheel (13) and the second gearwheel (15) with regard to an axial direction (A),
and either the electronic steering column lock system (1) comprising a pinion (18) connectable to a motor (19), said pinion (18) engaging the first gearwheel (13) and the second gearwheel (15),
or the electronic steering column lock system (1) comprising a first pinion and a second pinion connectable to a motor (19), said second pinion being coupled torsion proof to said first pinion, said first pinion engaging the first gearwheel and said second pinion engaging the second gearwheel,
wherein by rotating said pinion (18) or said first pinion and said second pinion in a certain direction, because of the opposite pitch of the first (10) and second (11) external threads, the first (13) and second (15) gearwheels move closer to each other applying a pressure to the disk after a certain axial movement of the gearwheels.

2. The electronic steering column lock system (1) according to claim 1, **characterized in that** the disk (12) and the first gearwheel (13) are at least partly overlapping each other with regard to a radial direction (R) and wherein the disk (12) and the second gearwheel (15) are at least partly overlapping each other with regard to the radial direction (R) .

3. The electronic steering column lock system according to any of claims 1-2, **characterized in that**
a) a first brake pad (23) is fixed at a face side of the first gearwheel (13) facing the disk (12) so that the first brake pad (23) and the disk (12) are overlapping each other at least partly with regard to a radial direction (R), and a second brake pad (24) is fixed at a face side of the second gearwheel (15) facing the disk (12) so that the second brake pad (24) and the disk (12) are overlapping each other at least partly with regard to the radial direction (R), and/or
b) a first brake pad (23) is fixed at a face side of the disk (12) facing the first gearwheel (15) so that the first break pad (23) and the disk (12) are overlapping each other at least partly with regard to a radial direction, and a second brake pad (24) is fixed at a face side of the disk facing the second gearwheel so that the second brake pad and the disk are overlapping each other at least partly with regard to a radial direction.

4. The electronic steering column lock system (1) according to any of claims 1-3, **characterized in that** said disk (12) and said steering column shaft (5) are formed integrally.

5. The electronic steering column lock system (1) according to any of claims 1-4, **characterized in that** said disk (12) is formed annularly and in particular circularly.

6. The electronic steering column lock system (1) according to any of claims 1-5, **characterized in that** the housing (2) is configured to be fixed at the inside of a vehicle, in particular at a dash board of the vehicle, and/or **characterized in that** the housing (2) provides at least one rotary feedthrough (8, 9) for the steering column shaft (5) wherein the rotary feedthrough (8, 9) is configured so that the centreline (17) of the steering column shaft (5) corresponds to the centerline of the first gearwheel (13) and corresponds to the centerline of the second gearwheel (15) .

7. The electronic steering column lock system (1) according to any of claims 1-6, **characterized in that** with regard to the axial direction (A) the distance between the first gearwheel (13) and the disk (12) and the distance between the second gearwheel (15) and the disk (12) are equal.

8. The electronic steering column lock system (1) according to any of claims 1-7, comprising a motor (19) being coupled to the pinion (18) or being coupled to said first pinion and to said second pinion.

9. The electronic steering column lock system (1) according to any of claims 1-8, **characterized in that** in a steering locked state of the electronic steering column lock system (1) the first gearwheel (13) and the disk (12) are locked with each other, in particular by means of the first brake pad (13), and/or the second gearwheel (15) and the disk (12) are locked with each other, in particular by means of the second brake pad (24).

10. The electronic steering column lock system (1) according to any of claims 1-9, **characterized in that** in an intermediate state of the electronic steering column lock system (1) which is between a steering locked state and a steering unlocked state the amount of pressure applied to the first gearwheel (13), the disk (12) and the second gearwheel (15) is less compared to the amount of said pressure applied in the steering locked state but more compared to the amount of said pressure applied in the steering unlocked state.

11. The electronic steering column lock system (1) according to any of claims 1-10, **characterized in that** the electronic steering column lock system (1) comprises a control unit being configured for controlling the motor (19).

12. The electronic steering column lock system (1) according to any of claims 1-11, **characterized in that** the electronic steering column lock system (1) comprises an external sensor or a communication means to other sensor like devices, and in particular **in that** the control unit is configured for controlling the motor (19) subject to a signal provided by the external sensor.

13. The electronic steering column lock system (1) according to any of claims 11-12, **characterized in that** the electronic steering column lock system (1) comprises a first pressure sensor being configured for detecting a pressure applied to the first gearwheel (13), the first brake pad (23) and the disk (12), and **in that** the electronic steering column lock system (1) comprises a second pressure sensor being configured for detecting a pressure applied to the second gearwheel (15), the second brake pad (24) and the disk (12), and **in that** the first pressure sensor and the second pressure sensor are connected to the control unit.

14. The electronic steering column lock system (1) according to claim 13, **characterized in that** the control unit is configured to control the motor (19) subject to a signal provided by the first pressure sensor and subject to a signal provided by the second pressure sensor in such a manner that a pressure whose amount is a predetermined function of the signal provided by the external sensor is applied to the first gearwheel (13), the first brake pad (23) and the disk (12) and/or to the second gearwheel (15), the second brake pad (24) and the disk (12).

15. The electronic steering column lock system (1) according to any of claims 11-14, **characterized in that** the control unit is configured to control the motor (19) in such a manner that subject to a signal provided by the external sensor an oscillating pressure is applied to the first gearwheel (13), the first brake pad (24) and the disk (12) and/or to the second gearwheel (15), the second brake pad (24) and the disk (12) .

## Patentansprüche

1. Elektronisches Lenksäulenverriegelungssystem (1), aufweisend:
ein Gehäuse (2), wobei das Gehäuse (2) ein erstes Außengewinde (10) aufweist, bei dem es sich um ein rechtsgängiges Gewinde handelt, und das Gehäuse (2) ein zweiten Außengewinde (11) aufweist, bei dem es sich um ein linksgängiges Gewinde handelt,
eine Lenksäulenwelle (5),
eine Scheibe (12), wobei die Scheibe (12) starr mit der Lenksäulenwelle (5) verbunden ist oder die Scheibe (12) dazu ausgebildet ist, starr mit der Lenksäulenwelle (5) verbunden zu sein,
ein erstes Zahnrad (13), das ein Innengewinde (14) aufweist, bei dem es sich um ein rechtsgängiges Gewinde handelt, und
ein zweites Zahnrad (15), das ein Innengewinde (16) aufweist, bei dem es sich um ein linksgängiges Gewinde handelt,
wobei das erste Zahnrad (13) mittels seines rechtsgängigen Gewindes (14) an dem rechtsgängigen Gewinde (10) des Gehäuses befestigt ist und das zweite Zahnrad (15) mittels seines linksgängigen Gewindes (16) an dem linksgängigen Gewinde (11) des Gehäuses (2) befestigt ist,
wobei die Scheibe (12) in Bezug auf eine axiale Richtung (A) zwischen dem ersten Zahnrad (13) und dem zweiten Zahnrad (15) angeordnet ist,
und wobei das elektronische Lenksäulenverriegelungssystem (1) entweder ein mit einem Motor (19) verbindbares Ritzel (18) aufweist, wobei das Ritzel (18) mit dem ersten Zahnrad (13) und dem zweiten Zahnrad (15) eingreift,
oder wobei das elektronische Lenksäulenverriegelungssystem (1) ein erstes Ritzel und ein zweites Ritzel aufweist, die mit einem Motor (19) verbindbar sind, wobei das zweite Ritzel drehsteif mit dem ersten Ritzel gekoppelt ist, wobei das erste Ritzel mit dem ersten Zahnrad eingreift und das zweite Ritzel mit dem zweiten Zahnrad eingreift,
wobei sich durch Drehen des Ritzels (18) oder des ersten Ritzels und des zweiten Ritzels in einer bestimmten Richtung wegen des entgegengesetzten Gewindegangs des ersten (10) und des zweiten (11) Außengewindes das erste (13) und das zweite (15) Zahnrad näher aufeinander zu bewegen und nach einer bestimmten axialen Bewegung der Zahnräder einen Druck auf die Scheibe ausüben.

2. Elektronisches Lenksäulenverriegelungssystem (1) nach Anspruch 1, **dadurch gekennzeichnet, dass** sich die Scheibe (12) und das erste Zahnrad (13) in Bezug auf eine radiale Richtung (R) wenigstens zum Teil überlappen, und wobei sich die Scheibe (12) und das zweite Zahnrad (15) in Bezug auf die radiale Richtung (R) wenigstens zum Teil überlappen.

3. Elektronisches Lenksäulenverriegelungssystem nach einem der Ansprüche 1 bis 2, **dadurch gekennzeichnet, dass**
a) ein erster Bremsbelag (23) an einer der Scheibe (12) zugewandten Stirnseite des ersten Zahnrads (13) befestigt ist, so dass sich der erste Bremsbelag (23) und die Scheibe (12) in Bezug auf eine radiale Richtung (R) wenigstens zum Teil überlappen, und zweiter Bremsbelag (24) an einer der Scheibe (12) zugewandten Stirnseite des zweiten Zahnrads (15) befestigt ist, so dass sich der zweite Bremsbelag (24) und die Scheibe (12) in Bezug auf die radiale Richtung (R) wenigstens zum Teil überlappen, und/oder
b) ein erster Bremsbelag (23) an einer dem ersten Zahnrad (15) zugewandten Stirnseite der Scheibe (12) befestigt ist, so dass sich der erste Bremsbelag (23) und die Scheibe (12) in Bezug auf eine radiale Richtung wenigstens zum Teil überlappen, und ein zweiter Bremsbelag (24) an einer dem zweiten Zahnrad zugewandten Stirnseite der Scheibe befestigt ist, so dass sich der zweite Bremsbelag und die Scheibe in Bezug auf eine radiale Richtung wenigstens zum Teil überlappen.

4. Elektronisches Lenksäulenverriegelungssystem (1) nach einem der Ansprüche 1 bis 3, **dadurch gekennzeichnet, dass** die Scheibe (12) und die Lenksäulenwelle (5) einstückig ausgebildet sind.

5. Elektronisches Lenksäulenverriegelungssystem (1) nach einem der Ansprüche 1 bis 4, **dadurch gekennzeichnet, dass** die Scheibe (12) ringförmig und insbesondere kreisförmig ausgebildet ist.

6. Elektronisches Lenksäulenverriegelungssystem (1) nach einem der Ansprüche 1 bis 5, **dadurch gekennzeichnet, dass** das Gehäuse (2) dazu ausgebildet ist, auf der Innenseite eines Fahrzeugs, insbesondere an einem Armaturenbrett des Fahrzeugs, befestigt zu werden, und/oder **dadurch gekennzeichnet, dass** das Gehäuse (2) wenigstens eine sich drehende Durchführung (8, 9) für die Lenksäulenwelle (5) vorsieht, wobei die sich drehende Durchführung (8, 9) so ausgebildet ist, dass die Mittellinie (17) der Lenksäulenwelle (5) der Mittellinie des ersten Zahnrads (13) entspricht und der Mittellinie des zweiten Zahnrads (15) entspricht.

7. Elektronisches Lenksäulenverriegelungssystem (1) nach einem der Ansprüche 1 bis 6, **dadurch gekennzeichnet, dass** der Abstand zwischen dem ersten Zahnrad (13) und der Scheibe (12) und der Abstand zwischen dem zweiten Zahnrad (15) und der Scheibe (12) in Bezug auf die axiale Richtung (A) gleich sind.

8. Elektronisches Lenksäulenverriegelungssystem (1) nach einem der Ansprüche 1 bis 7, aufweisend einen Motor (19), der mit dem Ritzel (18) gekoppelt ist oder mit dem ersten Ritzel und dem zweiten Ritzel gekoppelt ist.

9. Elektronisches Lenksäulenverriegelungssystem (1) nach einem der Ansprüche 1 bis 8, **dadurch gekennzeichnet, dass** das erste Zahnrad (13) und die Scheibe (12) in einem lenkverriegelten Zustand des elektronischen Lenksäulenverriegelungssystems (1) insbesondere mittels des ersten Bremsbelags (13) miteinander verriegelt sind und/oder das zweite Zahnrad (15) und die Scheibe (12) insbesondere mittels des zweiten Bremsbelags (24) miteinander verriegelt sind.

10. Elektronisches Lenksäulenverriegelungssystem (1) nach einem der Ansprüche 1 bis 9, **dadurch gekennzeichnet, dass** die Menge des auf das erste Zahnrad (13), die Scheibe (12) und das zweite Zahnrad (15) ausgeübten Drucks in einem Zwischenzustand des elektronischen Lenksäulenverriegelungssystems (1), der sich zwischen einem lenkverriegelten Zustand und einem lenkunverriegelten Zustand befindet, im Vergleich zu der Menge des in dem lenkverriegelten Zustand ausgeübten Drucks geringer, im Vergleich zu der Menge des in dem lenkunverriegelten Zustand ausgeübten Drucks jedoch größer ist.

11. Elektronisches Lenksäulenverriegelungssystem (1) nach einem der Ansprüche 1 bis 10, **dadurch gekennzeichnet, dass** das elektronische Lenksäulenverriegelungssystem (1) eine Steuereinheit aufweist, die dazu ausgebildet ist, den Motor (19) zu steuern.

12. Elektronisches Lenksäulenverriegelungssystem (1) nach einem der Ansprüche 1 bis 11, **dadurch gekennzeichnet, dass** das elektronische Lenksäulenverriegelungssystem (1) einen externen Sensor oder ein Kommunikationsmittel zu anderen sensorähnlichen Vorrichtungen aufweist und insbesondere dass die Steuereinheit dazu ausgebildet ist, den Motor (19) in Abhängigkeit von einem von dem externen Sensor bereitgestellten Signal steuert.

13. Elektronisches Lenksäulenverriegelungssystem (1) nach einem der Ansprüche 11 bis 12, **dadurch gekennzeichnet, dass** das elektronische Lenksäulenverriegelungssystem (1) einen ersten Drucksensor aufweist, der dazu ausgebildet ist, einen auf das erste Zahnrad (13), den ersten Bremsbelag (23) und die Scheibe (12) ausgeübten Druck zu erkennen, und dass das elektronische Lenksäulenverriegelungssystem (1) einen zweiten Drucksensor aufweist, der dazu ausgebildet ist, einen auf das zweite Zahnrad (15), den zweiten Bremsbelag (24) und die Scheibe (12) ausgeübten Druck zu erkennen, und dass der erste Drucksensor und der zweite Drucksensor mit der Steuereinheit verbunden sind.

14. Elektronisches Lenksäulenverriegelungssystem (1) nach Anspruch 13, **dadurch gekennzeichnet, dass** die Steuereinheit dazu ausgebildet ist, den Motor (19) in Abhängigkeit von einem von dem ersten Drucksensor bereitgestellten Signal und in Abhängigkeit von einem von dem zweiten Drucksensor bereitgestellten Signal auf eine solche Weise zu steuern, dass ein Druck, dessen Menge eine vorgegebene Funktion des von dem externen Sensor bereitgestellten Signals ist, auf das erste Zahnrad (13), den ersten Bremsbelag (23) und die Scheibe (12) und/oder auf das zweite Zahnrad (15), den zweiten Bremsbelag (24) und die Scheibe (12) ausgeübt wird.

15. Elektronisches Lenksäulenverriegelungssystem (1) nach einem der Ansprüche 11 bis 14, **dadurch gekennzeichnet, dass** die Steuereinheit dazu ausgebildet ist, den Motor (19) auf eine solche Weise zu steuern, dass in Abhängigkeit von einem von dem externen Sensor bereitgestellten Signal ein schwingender Druck auf das erste Zahnrad (13), den ersten Bremsbelag (24) und die Scheibe (12) und/oder auf das zweite Zahnrad (15), den zweiten Bremsbelag (24) und die Scheibe (12) ausgeübt wird.

## Revendications

1. Système de verrouillage de colonne de direction électronique (1) comprenant :
un carter (2), ledit carter (2) comprenant un premier filetage extérieur (10) qui est un filetage à droite et ledit carter (2) comprenant un second filetage extérieur (11) qui est un filetage à gauche,
un arbre de colonne de direction (5),
un disque (12), ledit disque (12) étant raccordé de manière rigide à l'arbre de colonne de direction (5) ou ledit disque (12) étant configuré pour être raccordé de manière rigide à l'arbre de colonne de direction (5),
une première roue d'engrenage (13) comprenant un filetage intérieur (14) qui est un filetage à droite et
une seconde roue d'engrenage (15) comprenant un filetage intérieur (16) qui est filetage à gauche,
la première roue d'engrenage (13), par le biais de son filetage à droite (14), étant installée sur le filetage à droite (10) du carter et la seconde roue d'engrenage (15), par le biais de son filetage à gauche (16), étant installée sur le filetage à gauche (11) du carter (2),
le disque (12) étant disposé entre la première roue d'engrenage (13) et la seconde roue d'engrenage (15) suivant une direction axiale (A),
et le système de verrouillage de colonne de direction électronique (1) comprenant un pignon (18) apte à être raccordé à un moteur (19), ledit pignon (18) venant en prise avec la première roue d'engrenage (13) et la seconde roue d'engrenage (15),
ou le système de verrouillage de colonne de direction électronique (1) comprenant un premier pignon et un second pignon aptes à être raccordés à un moteur (19), ledit second pignon étant accouplé avec résistance à la torsion audit premier pignon, ledit premier pignon venant en prise avec la première roue d'engrenage et ledit second pignon venant en prise avec ladite seconde roue d'engrenage,
dans lequel une mise en rotation dudit pignon (18) ou dudit premier pignon et dudit second pignon dans une certaine direction, du fait du pas opposé des premier (10) et second (11) filetages extérieurs, entraîne un déplacement des première (13) et seconde (15) roues d'engrenage qui les rapproche l'une de l'autre de sorte qu'une pression est appliquée au disque après un certain déplacement axial des roues d'engrenage.

2. Système de verrouillage de colonne de direction électronique (1) selon la revendication 1, **caractérisé en ce que** le disque (12) et la première roue d'engrenage (13) sont au moins partiellement superposés suivant une direction radiale (R) et dans lequel le disque (12) et la seconde roue d'engrenage (15) sont au moins partiellement superposés suivant la direction radiale (R).

3. Système de verrouillage de colonne de direction électronique selon l'une quelconque des revendications 1 et 2, **caractérisé en ce que**
a) un premier patin de freinage (23) est fixé au niveau d'une face de la première roue d'engrenage (13) en regard du disque (12) de telle sorte que le premier patin de freinage (23) et le disque (12) soient superposés au moins partiellement suivant une direction radiale (R) et un second patin de freinage (24) est fixé au niveau d'une face de la seconde roue d'engrenage (15) en regard du disque (12) de telle sorte que le second patin de freinage (24) et le disque (12) soient superposés au moins partiellement suivant la direction radiale (R) et/ou
b) un premier patin de freinage (23) est fixé au niveau d'une face du disque (12) en regard de la première roue d'engrenage (15) de telle sorte que le premier patin de freinage (23) et le disque (12) soient superposés au moins partiellement suivant une direction radiale et un second patin de freinage (24) est fixé au niveau d'une face du disque en regard de la seconde roue d'engrenage de telle sorte que le second patin de freinage et le disque soient superposés au moins partiellement suivant une direction radiale.

4. Système de verrouillage de colonne de direction électronique (1) selon l'une quelconque des revendications 1 à 3, **caractérisé en ce que** ledit disque (12) et ledit arbre de colonne de direction (5) sont formés d'un seul tenant.

5. Système de verrouillage de colonne de direction électronique (1) selon l'une quelconque des revendications 1 à 4, **caractérisé en ce que** ledit disque (12) est réalisé sous une forme annulaire et en particulier une forme circulaire.

6. Système de verrouillage de colonne de direction électronique (1) selon l'une quelconque des revendications 1 à 5, **caractérisé en ce que** le carter (2) est configuré pour être fixé au niveau de l'intérieur d'un véhicule, en particulier au niveau d'un tableau de bord du véhicule, et/ou **caractérisé en ce que** le carter (2) forme au moins un passage traversant rotatif (8, 9) pour l'arbre de colonne de direction (5), dans lequel le passage traversant rotatif (8, 9) est configuré de telle sorte que la ligne centrale (17) de l'arbre de colonne de direction (5) corresponde à la ligne centrale de la première roue d'engrenage (13) et corresponde à la ligne centrale de la seconde roue d'engrenage (15).

7. Système de verrouillage de colonne de direction électronique (1) selon l'une quelconque des revendications 1 à 6, **caractérisé en ce que**, suivant la direction axiale (A), la distance entre la première roue d'engrenage (13) et le disque (12) et la distance entre la seconde roue d'engrenage (15) et le disque (12) sont égales.

8. Système de verrouillage de colonne de direction électronique (1) selon l'une quelconque des revendications 1 à 7, comprenant un moteur (19) qui est accouplé au pignon (18) ou qui est accouplé audit premier pignon et audit second pignon.

9. Système de verrouillage de colonne de direction électronique (1) selon l'une quelconque des revendications 1 à 8, **caractérisé en ce que**, dans un état de direction verrouillée du système de verrouillage de colonne de direction électronique (1), la première roue d'engrenage (13) et le disque (12) sont mutuellement verrouillés, en particulier au moyen du premier patin de freinage (13), et/ou la seconde roue d'engrenage (15) et le disque (12) sont mutuellement verrouillés, en particulier au moyen du second patin de freinage (24).

10. Système de verrouillage de colonne de direction électronique (1) selon l'une quelconque des revendications 1 à 9, **caractérisé en ce que**, dans un état intermédiaire du système de verrouillage de colonne de direction électronique (1) qui se situe entre un état de direction verrouillée et un état de direction déverrouillée, la quantité de pression appliquée à la première roue d'engrenage (13), au disque (12) et à la seconde roue d'engrenage (15) est inférieure par comparaison avec la quantité de ladite pression appliquée dans l'état de direction verrouillée mais supérieure par comparaison avec la quantité de ladite pression appliquée dans l'état de direction déverrouillée.

11. Système de verrouillage de colonne de direction électronique (1) selon l'une quelconque des revendications 1 à 10, **caractérisé en ce que** le système de verrouillage de colonne de direction électronique (1) comprend une unité de commande qui est configurée pour commander le moteur (19).

12. Système de verrouillage de colonne de direction électronique (1) selon l'une quelconque des revendications 1 à 11, **caractérisé en ce que** le système de verrouillage de colonne de direction électronique (1) comprend un capteur extérieur ou un moyen de communication avec d'autres dispositifs analogues à des capteurs, et en particulier **en ce que** l'unité de commande est configurée pour commander le moteur (19) en fonction d'un signal fourni par le capteur extérieur.

13. Système de verrouillage de colonne de direction électronique (1) selon l'une quelconque des revendications 11 et 12, **caractérisé en ce que** le système de verrouillage de colonne de direction électronique (1) comprend un premier capteur de pression qui est configuré pour détecter une pression appliquée à la première roue d'engrenage (13), au premier patin de freinage (23) et au disque (12), et **en ce que** le système de verrouillage de colonne de direction électronique (1) comprend un second capteur de pression qui est configuré pour détecter une pression appliquée à la seconde roue d'engrenage (15), au second patin de freinage (24) et au disque (12), et **en ce que** le premier capteur de pression et le second capteur de pression sont reliés à l'unité de commande.

14. Système de verrouillage de colonne de direction électronique (1) selon la revendication 13, **caractérisé en ce que** l'unité de commande est configurée pour commander le moteur (19) en fonction d'un signal fourni par le premier capteur de pression et en fonction d'un signal fourni par le second capteur de pression de telle sorte qu'une pression, dont la quantité est une fonction prédéterminée du signal fourni par le capteur extérieur, soit appliquée à la première roue d'engrenage (13), au premier patin de freinage (23) et au disque (12) et/ou à la seconde roue d'engrenage (15), au second patin de freinage (24) et au disque (12).

15. Système de verrouillage de colonne de direction électronique (1) selon l'une quelconque des revendications 11 à 14, **caractérisé en ce que** l'unité de commande est configurée pour commander le moteur (19) de telle sorte que, en fonction d'un signal fourni par le capteur extérieur, une pression oscillante soit appliquée à la première roue d'engrenage (13), au premier patin de freinage (24) et au disque (12) et/ou à la seconde roue d'engrenage (15), au second patin de freinage (24) et au disque (12).
